# EUROPEAN PATENT APPLICATION

(11) **EP 4 597 087 A1**
(43) Date of publication of application: **06.08.2025**
(21) Application number: 23872005.6
(22) Date of filing: 15.09.2023
(51) Int. Cl.: G01N 23/041, G01N 23/04

(54) **IMAGE DISPLAY DEVICE, IMAGE DISPLAY SYSTEM, IMAGE DISPLAY METHOD, IMAGE PROCESSING DEVICE, AND PROGRAM**

(30) Priority: 30.09.2022 JP 2022157836
(71) Applicant: KONICA MINOLTA, INC., Tokyo 100-7015 (JP)
(72) Inventor: KIKUCHI, Ryouhei, Tokyo 100-7015 (JP); ITO, Yasutoshi, Tokyo 100-7015 (JP)
(74) Representative: MFG Patentanwälte Meyer-Wildhagen Meggle-Freund Gerhard PartG mbB
(86) International application number: PCT/JP2023/033766
(87) International publication number: WO 2024/070777

(57) **Abstract**

The present invention provides an image display device, an image display system, an image display method, an image processing device, and a program that can facilitate easier evaluation of characteristics of inspection targets. Provided is an image display device (image processing device 2) that displays a plurality of moire images or reconstructed images to which second characteristic information is added among the characteristic information regarding the direction, including first characteristic information regarding the direction of the inspection target and second characteristic information regarding the direction of the image of the inspection target, the image display device comprising: a first selection unit (operation unit 22) that selects one piece of second characteristic information; and a display unit (display unit 23) that displays a plurality of moire images or reconstructed images aligned in the same direction on the basis of the second characteristic information selected by the first selection unit, wherein the display unit (display unit 23) displays characteristic information regarding the direction including at least one each of first characteristic information and second characteristic information together with the plurality of moire images or reconstructed images.

## Description

### Technical Field

The present invention relates to an image display device, an image display system, an image display method, an image processing device, and a program.

### Background Art

Conventionally, a radiation imaging device using a Talbot interferometer or a Talbot - Lau interferometer utilizing the Talbot effect has been known. The Talbot effect is a phenomenon in which, when coherent light passes through a first grating in which slits are provided at a constant period, a grating image of the light is formed at a constant period in the traveling direction of the light. This grating image is called a self-image, and the Talbot interferometer measures a moire fringe generated by slightly shifting a second grating after the second grating is arranged at a position where the self-image is formed. In the case of performing X-ray imaging by a Talbot interferometer or a Talbot -Lau interferometer, moire is disturbed when an object is arranged in front of the second grating, and therefore, a subject is arranged in front of the first grating and is irradiated with coherent X-rays. Then, a display image of the subject can be obtained by computing the obtained image of the moire fringes (PTL 1).

Further, the radiation imaging device captures a plurality of images having different orientations with respect to the grating by rotating the subject on a plane. Orientation imaging is also performed in which image processing is performed on the images to derive information such as the degree of orientation (e.g., orientation information on the fibers of the subject) that is not known from the images alone, thereby generating an orientation image.

In addition, in recent years, for example, a demand for a reduction in the weight of an automobile has increased from the viewpoint of fuel efficiency and the like, and a severe design change such as maintaining strength while reducing the weight has been required. Therefore, the design of the molded product which is the inspection target is changed by using the above-described radiation imaging device which can take into consideration the internal information of the molded product. Specifically, for example, the user captures an image of the sample using the radiation imaging device. Next, the user compares the plurality of captured images with each other to specify a trouble portion or a failure portion. Then, the user adjusts the material and molding conditions of the molded product on the basis of the identification result.

### Citation List

### Patent Literature

Patent Document 1: JP 2018-166630A

### Summary of Invention

### Technical Problem

When a plurality of images as described above are compared with each other to identify a trouble portion or a failure portion, specifically, one of pieces of characteristic information inherent in the images is combined, and the other pieces of characteristic information are compared with each other in accordance with the combined characteristic information, thereby identifying the trouble portion or failure portion. Thus, it is possible to cope with a severe design change of the molded product in consideration of the internal information, which leads to improvement of the molded product. However, since there are a plurality of pieces of characteristic information inherent in an image, such as the orientation of a grating, the orientation of an image, an orientation angle, and an orientation color, which needs to be confirmed together when a trouble portion or a failure portion is specified, and a plurality of images are captured for each sample, the plurality of images to be compared is enormous in number. Then, the user performs comparison using a plurality of pieces of characteristic information given to such an enormous number of images by imagining in his/her mind, and thus the accuracy of the characteristic evaluation is low and the characteristic evaluation takes time and effort.

In particular, in improving a molded product, it is effective to perform analysis while also associating, with an image, characteristic information of a direction possessed by a subject in addition to characteristic information of a direction inherent in the image. At this time, the user performs comparison by adding characteristic information in the direction of the subject together with one piece of characteristic information inherent in the image by imagining it in his/her head, which is more complicated, lacks the accuracy of characteristic evaluation, and takes time and effort for characteristic evaluation.

Therefore, it has been difficult to easily evaluate the characteristics of the inspection target.

Therefore, a problem of the present invention is to provide an image display device, an image display system, an image display method, an image processing device, and a program that can more easily perform characteristic evaluation of an inspection target.

### Solution to Problem

In order to solve the above problem, the image display device of the present invention is
an image display device that displays a plurality of moire images or reconstructed images to which second characteristic information among characteristic information on a direction including first characteristic information on a direction of an inspection target and the second characteristic information on a direction of an image of the inspection target is given, the image display device comprising:
a first selector that selects one piece of the second characteristic information; and
a display that aligns and displays the plurality of moire images or reconstructed images in a same direction, based on the second characteristic information selected by the first selector,
wherein
the display displays characteristic information on the direction including at least one piece of the first characteristic information and one piece of the second characteristic information together with the plurality of moire images or reconstructed images.

Furthermore, the image display system of the present invention is
an image display system including an image display device that displays a plurality of moire images or reconstructed images to which second characteristic information among characteristic information on a direction including first characteristic information on a direction of an inspection target and the second characteristic information on a direction of an image of the inspection target is given, the image display system comprising:
a first selector that selects one piece of the second characteristic information; and
a display that aligns and displays the plurality of moire images or reconstructed images in a same direction, based on the second characteristic information selected by the first selector,
wherein
the display displays characteristic information on the direction including at least one piece of the first characteristic information and one piece of the second characteristic information together with the plurality of moire images or reconstructed images.

Furthermore, the image display method of the present invention is an image display method using an image display device that displays a plurality of moire images or reconstructed images to which second characteristic information among characteristic information on a direction including first characteristic information on a direction of an inspection target and the second characteristic information on a direction of an image of the inspection target is given, the method comprising:
a first selection step of selecting one piece of the second characteristic information; and
a display step of aligning and displaying the plurality of moire images or reconstructed images in a same direction, based on the second characteristic information selected in the first selection stsep,
wherein
in the display step, characteristic information on the direction including at least one piece of the first characteristic information and one piece of the second characteristic information is displayed together with the plurality of moire images or reconstructed images.

Furthermore, the image processing device of the present invention is
an image processing device that performs image processing on a plurality of moire images or reconstructed images to which second characteristic information among characteristic information on a direction including first characteristic information on a direction of an inspection target and the second characteristic information on a direction of an image of the inspection target is given, the image processing device comprising:
a first selector that selects one piece of the second characteristic information; and
an image processor that aligns the plurality of moire images or reconstructed images in a same direction, based on the second characteristic information selected by the first selector,
wherein
the image processor causes a display to display characteristic information on the direction including at least one piece of the first characteristic information and one piece of the second characteristic information together with the plurality of moire images or reconstructed images.

In addition, the program of the present invention is
a program for a computer of an image display device that displays a plurality of moire images or reconstructed images to which second characteristic information among characteristic information on a direction including first characteristic information on a direction of an inspection target and the second characteristic information on a direction of an image of the inspection target is given, the program causing the computer to function as:
a first selector that selects one piece of the second characteristic information; and
an image processor that aligns the plurality of moire images or reconstructed images in a same direction, based on the second characteristic information selected by the first selector,
wherein
the image processor causes a display to display characteristic information on the direction including at least one piece of the first characteristic information and one piece of the second characteristic information together with the plurality of moire images or reconstructed images.

### Advantageous Effects of Invention

According to the present invention, it is possible to more easily perform characteristic evaluation of an inspection target.

### Brief Description of Drawings

[FIG. 1] This is a schematic view showing the whole image of an X-ray Talbot imaging device.
[FIG. 2] This is a diagram illustrating the principle of a Talbot interferometer.
[FIG. 3] This is a schematic plan view of a source grating, a first grating, and a second grating.
[FIG 4] This is a diagram illustrating a positional relationship between a subject table and a subject.
[FIG. 5] This is a diagram illustrating a positional relationship between a subject table and a subject.
[FIG. 6] This is a block diagram illustrating the functional configuration of an image processing device.
[FIG. 7] This is a flowchart illustrating image processing.
[FIG. 8] This is a display example of a menu screen.
[FIG. 9] This is a display example of a comparison display screen.
[FIG. 10A] This is an example of an icon indicating the orientation of a grating and the front and back of a subject.
[FIG. 10B] This is an example of an icon indicating the orientation of a grating and the front and back of a subject.
[FIG. 10C] This is an example of an icon indicating the orientation of a grating and the front and back of a subject.
[FIG. 11] This is a display example of the comparison display screen.
[FIG. 12] This is a display example of a comparison display screen.
[FIG. 13] This is a display example of a pop-up screen.
[FIG. 14] This is a display example of a comparison display screen.
[FIG. 15] This is a display example of a comparison display screen.
[FIG. 16] This is a display example of a comparison display screen.
[FIG. 17] This is a display example of the comparison display screen.
[FIG. 18] This is a display example of the comparison display screen.
[FIG. 19] This is a display example of the comparison display screen.
[FIG. 20] This is a display example of a continuous display screen.
[FIG. 21] This is a display example of a continuous display screen.
[FIG. 22] This is an image view of a subject continuously displayed.
[FIG. 23] This is a display example of a continuous display screen.
[FIG. 24] This is an image diagram of a subject which is continuously displayed.
[FIG. 25] This is an image diagram in which a two dimensional image is selected from a three dimensional image and its orientation is aligned.
[FIG. 26] This is a display example for selecting a plane.
[FIG. 27] This is an image diagram for aligning the orientation of three dimensional image.

### Description of Embodiments

In the following, embodiments of the present invention will be described with reference to the drawings. Note that although various technically preferable limitations for carrying out the present invention are appended to the embodiments described below, the technical scope of the present invention is not limited to the following embodiments and illustrated examples.

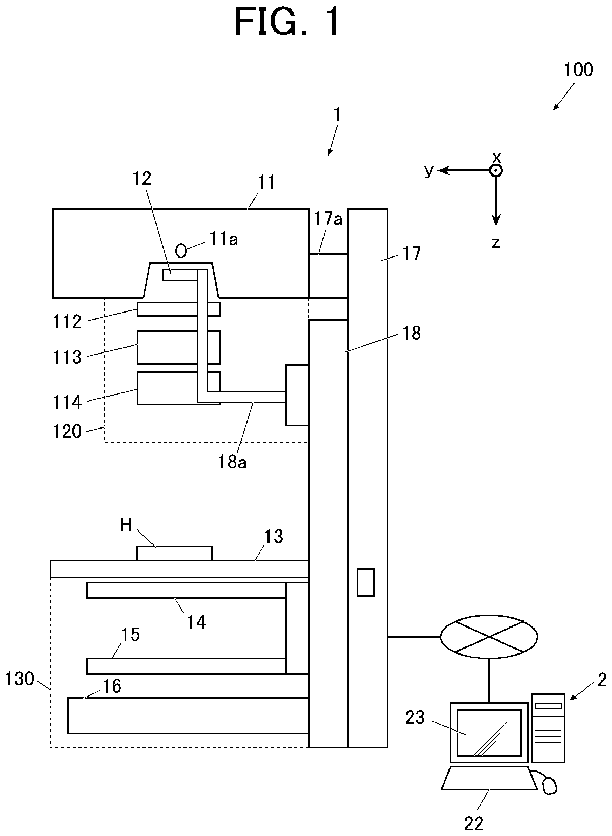

As illustrated in Fig. 1, the X-ray imaging system 100 according to the present embodiment includes an X-ray Talbot imaging device 1 and an image processing device 2.

The X-ray imaging system 100 uses the X-ray Talbot imaging device 1 to image the subject H a plurality of times while changing the imaging angle, and the image processing device 2 generates a reconstructed image for each imaging angle based on the moire image read by the X-ray Talbot imaging device 1.

As the X-ray Talbot imaging device 1, an device using a Talbot - Lau interferometer including a source grating (also referred to as a G0 grating) 12 is adopted. Note that it is also possible to adopt an X-ray Talbot imaging device using a Talbot interferometer which does not include the source grating 12 and includes only the first grating (also referred to as a G1 grating) 14 and the second grating (also referred to as a G2 grating) 15.

The inspection target in the present embodiment is formed of a composite material (also referred to as a composite raw material), and is used as a constituent member of various products or the like including, for example, electric, electronic, and household electric appliances, a parabolic antenna, a bathtub, a floor material, a roof material, and the like in addition to space and aircraft, an automobile, a ship, and a hanging rod.

As such composite materials, for example, fiber-reinforced plastics (FRP) typified by carbon-fiber-reinforced plastics (CFRP) , carbon fiber-reinforced thermoplastics (CFRTP), and glass-fiber-reinforced plastics (GFRP) using carbon fibers or glass fibers as reinforcing fibers, ceramic matrix composites (CMC) using ceramic fibers as a reinforcing material, and the like are known. In addition, in a broad sense, for example, a composite material made of a plurality of kinds of woods such as plywood may be included. In addition, for example, composite materials that are configured without including fibers, such as metal matrix composites (MMC) concrete and reinforced concrete, may also be included.

Note that the resin used for the composite material is, for example, general-purpose plastic, engineering plastic, or super engineering plastic, but is not limited thereto. A resin is used as a resin composite material to which a filler having a micro-size or nano-size structure is added in order to add predetermined characteristics such as strength, and is often used as a plastic molded product. The filler includes an organic material, an inorganic material, a magnetic material, and a metal material. For example, in a case where strength or rigidity is required for a plastic molded product, a composite material may be used in which PPS, POM, PA, PC, PP, or the like is used as the resin, and aramid fiber, talc, cellulose fiber, or the like is used as the filler. In addition, in a case where the plastic molded product is PLAMAG, a composite material of nylon as the resin and strontium ferrite, samarium cobalt, or the like as the filler is used in some cases.

The molded product which is the inspection target as described above is manufactured by pouring resin or the like into a mold, extruding resin into a sheet shape, or the like. The subject H may be a molded product itself or a sample cut out from a molded product. The inspection target is not limited to a molded product.

Here, in the subject H, a resin-flowing direction when resins or the like are poured into a mold is referred to as a machine dirrection (MD) direction, a direction perpendicular to the MD direction in a horizontal plane is referred to as a transverse dirrection (TD) direction, and a direction perpendicular to an MD-TD plane is referred to as a normal direction (ND).

### [About X-ray Talbot imaging device]

FIG. 1 is a schematic diagram showing an overall view of an X-ray Talbot imaging device 1 according to the present embodiment. As shown in FIG. 1, the X-ray Talbot imaging device 1 according to the present embodiment includes an X-ray generating device 11, a source grating 12, a subject table 13, a first grating 14, a second grating 15, an X-ray detector 16, a column 17, and a base 18.

According to such an X-ray Talbot imaging device 1, at least three types of images (referred to as reconstructed images) can be reconstructed by imaging a moire image of the subject H at a predetermined position with respect to the subject table 13 by a method based on the principle of the fringe scanning method or analyzing the moire image using the Fourier transform method.

That is, the three types of images are an absorption image (the same as a normal X-ray absorption image) obtained by imaging an average component of moire fringes in a moire image, a differential phase image obtained by imaging phase information of the moire fringes, and a small-angle scattering image obtained by imaging visibility (definition) of the moire fringes. In various screens to be described later, an absorption image is represented as an AT image, a small-angle scattering image is represented as an SC image, and a differential phase image is represented as a DPH image.

Note that it is also possible to generate more types of images by, for example, recombining these three types of reconstructed images. For example, using small-angle scattering images captured at a plurality of (three or more) grating opposing angles, the images are aligned with each other and then fitting is performed with a sine wave for each pixel to extract fitting parameters. The graph of the sine wave is a graph in which the horizontal axis represents the relative angle between the sample and the grating and the vertical axis represents the small-angle scattering signal value of a certain pixel. The amplitude, average, and phase of the sine wave are obtained as fitting parameters. An image representing an amplitude value for each pixel is referred to as an Amp image (orientation degree image), an image representing an average value for each pixel is referred to as an Ave image (scattering intensity image or fiber amount image), an image representing a phase (unit: rad) for each pixel is referred to as a Pha image (orientation angle image), and an image representing a phase (unit: deg) for each pixel is referred to as a Rad image (orientation angle image). Furthermore, an image created by associating the signal value of the Ave image or the Amp image with the luminance and the signal value of the Pha image or the Rad image with the color is referred to as an Ori image (orientation color image). Note that the fitting method is not limited to a sine wave.

Hereinafter, the moire image, the three types of reconstructed images (the AT image, the SC image, and the DPH image) generated from the moire image, the Ave image, the Amp image, the Pha image, the Rad image, and the Ori image are collectively referred to as captured images. Hereinafter, the reconstructed image refers to a combination of the three types of reconstructed images (the AT image, the SC image, and the DPH image) and the images generated by recombining the reconstructed images (the Ave image, the Amp image, the Pha image, the Rad image, and the Ori image).

Note that the fringe scanning method means that reconstruction is performed using moire images captured M times by moving one of a plurality of gratings by 1/M (M is a positive integer, M> 2 for an absorption image, and M> 3 for a differential phase image and a small-angle scattering image) of a slit period of the grating in a slit period direction, this is a method for obtaining a high-definition reconstructed image.

The Fourier transform method is a method in which one moire image is captured by an X-ray Talbot imaging device in a state where a subject is present, and the moire image is subjected to Fourier transform or the like in image processing to reconstruct and generate an image such as a differential phase image.

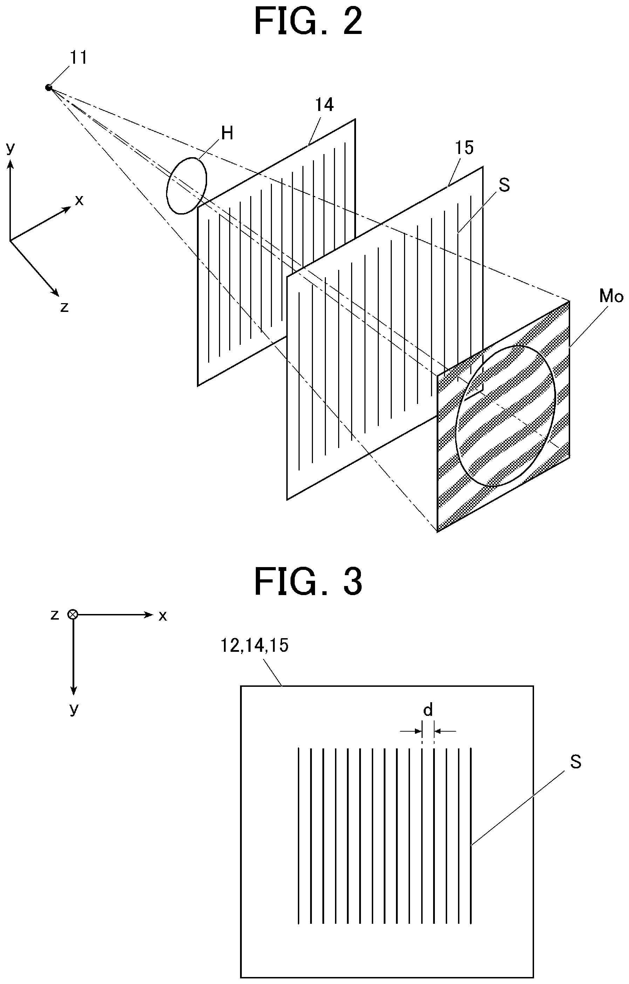

Next, a principle common to the Talbot interferometer and the Talbot - Lau interferometer will be described with reference to Fig. 2.

Although the case of the Talbot interferometer is shown in FIG. 2, the case of the Talbot - Lau interferometer will be described basically in the same manner. Further, the z direction in FIG. 2 corresponds to the vertical direction in the X-ray Talbot imaging device 1 in FIG. 1, and the x and y directions in FIG. 2 correspond to the horizontal directions (front-rear and right-left directions) in the X-ray Talbot imaging device 1 in FIG. 1.

Furthermore, as illustrated in Fig. 3, in the first grating 14 and the second grating 15 (also in the source grating 12 in the case of the Talbot -Lau interferometer), a plurality of slits S are formed to be arranged at a predetermined period d in the x direction that is orthogonal to the z direction that is the X-ray irradiation direction.

As illustrated in Fig. 2, when the X-rays emitted from the X-ray source 11a (the X-ray generating device 11) (in the case of a Talbot -Lau interferometer, the X-rays emitted from the X-ray source 11a and converted into X-rays from multiple light sources by the source grating 12 (not illustrated in Fig. 2)) pass through the first grating 14, the transmitted X-rays form images at regular intervals in the z direction. This image is referred to as a self-image (also referred to as a grating image or the like), and a phenomenon in which such self-images are formed at constant intervals in the z direction is referred to as the Talbot effect.

That is, as illustrated in Fig. 2, the Talbot effect refers to a phenomenon in which, when coherent light is transmitted through the first grating 14 in which slits S are provided at a constant period d,self-images of the light are formed at constant intervals in the traveling direction of the light as described above.

Then, as shown in FIG. 2, the second grating 15 provided with the slits S similarly to the first grating 14 is disposed at a position where the self-image of the first grating 14 is formed. At that time, when the second grating 15 is arranged such that the extending direction of the slits S of the second grating 15 (i.e., the x-axis direction in Fig. 2) is substantially parallel to the extending direction of the slits S of the first grating 14, the moire image Mo is obtained on the second grating 15.

Note that in Fig. 2, when the moire image Mo is illustrated on the second grating 15, the moire fringes and the slits S are mixed, which makes it difficult to understand, and therefore, the moire image Mo is illustrated away from the second grating 15. However, in practice, the moire image Mo is formed on the second grating 15 and its downstream side. Then, the moire image Mo is captured by the X-ray detector 16 arranged immediately below the second grating 15.

Furthermore, as illustrated in Fig. 2, if a subject H exists between the X-ray source 11a (X-ray generating device 11) and the first grating 14 (i.e., on the subject table 13 in Fig. 1), the phases of the X-rays are shifted by the subject H, and thus the moire fringes of the moire image Mo are disturbed with the periphery of the subject as a boundary. On the other hand, although illustration is omitted, the moire image Mo including only moire fringes appears if the subject H is not present between the X-ray source 11a (X-ray generating device 11) and the first grating 14. The above is the principle of the Talbot interferometer and the Talbot - Lau interferometer.

Based on this principle, also in the X-ray Talbot imaging device 1 according to the present embodiment, for example, as illustrated in Fig. 1, the second grating 15 is arranged at a position where the self-image of the first grating 14 is formed in the second cover unit 130. Furthermore, as described above, since the moire image Mo (see Fig. 2) is blurred when the second grating 15 and the X-ray detector 16 are separated from each other, the X-ray detector 16 is arranged immediately below the second grating 15 in the present embodiment.

Note that the second cover unit 130 is provided to protect the X-ray detector 16 and the like by preventing a person or an object from hitting or touching the first grating 14, the second grating 15, the X-ray detector 16, and the like.

Although not illustrated, the X-ray detector 16 is configured such that conversion elements that generate electrical signals in response to applied X-rays are arranged two dimensionally (in a matrix), and such that the electrical signals generated by the conversion elements are read as image signals. Then, in the present embodiment, the X-ray detector 16 captures the moire image Mo, which is an image of the X-rays formed on the second grating 15, as an image signal for each conversion element.

Then, in the present embodiment, the X-ray Talbot imaging device 1 captures a plurality of moire images Mo using a so-called fringe scanning method. That is, the X-ray Talbot imaging device 1 according to the present embodiment captures a plurality of moire images Mo while shifting the relative positions of the first grating 14 and the second grating 15 in the x-axis direction in Figs. 1 to 3 (i.e., the direction orthogonal to the direction in which the slits S extend (the y-axis direction)).

Then, through image processing in the image processing device 2 that has received the image signals of the plurality of moire images Mo from the X-ray Talbot imaging device 1, an absorption image, a differential phase image, a small-angle scattering image, and the like are reconstructed on the basis of the plurality of moire images Mo.

Therefore, in order that the X-ray Talbot imaging device 1 according to the present embodiment captures a plurality of moire images Mo by the fringe scanning method, a moving device (not illustrated) or the like is provided for moving the first grating 14 in the x-axis direction by a predetermined amount at a time. Note that it is also possible to adopt a configuration in which, instead of moving the first grating 14, the second grating 15 is moved, or both are moved.

Furthermore, it is also possible to adopt a configuration in which the X-ray Talbot imaging device 1 captures only one moire image Mo while the relative positions of the first grating 14 and the second grating 15 are fixed, and in image processing in the image processing device, the moire image Mo is analyzed or the like by using the Fourier transform method or the like to reconstruct an absorption image, a differential phase image, or the like.

When this method is used, it is not always necessary to provide the X-ray Talbot imaging device 1 with the above-described moving device or the like. Note that the present invention is also applied to an X-ray Talbot imaging device that is not provided with such a moving device.

The configuration of other parts in the X-ray Talbot imaging device 1 according to the present embodiment will be described. In the present embodiment, the X-ray imaging device is a so-called vertical type, and the X-ray generating device 11, the source grating 12, the subject table 13, the first grating 14, the second grating 15, and the X-ray detector 16 are arranged in this order in a z direction that is a gravity direction. That is, in the present embodiment, the z direction is an irradiation direction of X-rays from the X-ray generating device 11.

The X-ray generating device 11 includes, as an X-ray source 11a, for example, a Coolidge X-ray source, a rotating-anode X-ray source, or the like which is widely and generally used in a medical site. It is also possible to use other X-ray sources. The X-ray generating device 11 of the present embodiment irradiates X-rays in a cone beam shape from a focal point. That is, the X-rays are emitted in such a manner as to spread as the X-rays are separated farther from the X-ray generating device 11.

In the present embodiment, the source grating 12 is provided below the X-ray generating device 11. At that time, in order that vibration of the X-ray generating device 11 generated due to rotation of the positive electrode of the X-ray source 11a or the like is not transmitted to the source grating 12, in the present embodiment, the source grating 12 is not attached to the X-ray generating device 11 but is attached to a fixing member 18a attached to a base section 18 provided on a support column 17.

Note that in the present embodiment, a buffer member 17a is provided between the X-ray generating device 11 and the support pillar 17 in order to prevent the vibration of the X-ray generating device 11 from propagating to other portions of the X-ray Talbot imaging device 1 such as the support pillar 17 (or in order to reduce the propagating vibration).

In the present embodiment, in addition to the source grating 12, a filter (also referred to as an additional filter) 112 for changing the radiation quality of the X-rays having passed through the source grating 12, an irradiation field stop 113 for stopping down the irradiation field of the X-rays to be emitted, an irradiation field lamp 114 for performing alignment by emitting visible light, instead of the X-rays, to the subject before the X-rays are emitted, and the like are attached to the fixing member 18a.

The source grating 12, the filter 112, and the irradiation field diaphragm 113 are not necessarily provided in this order. Furthermore, in the present embodiment, a first cover unit 120 is arranged around the source grating 12 and the like to protect them.

The subject table 13 is a table on which the subject H is placed. The subject table 13 is provided with a fixing unit (not shown) for fixing the position of the subject H with respect to the X-rays emitted from the X-ray generating device 11. The fixing unit includes a fixing section that can fix the subject H at a predetermined position and a moving mechanism that can rotate the fixing section on the XY axes (two dimensional directions) + the Θ axis (three dimensional directions). By using such a fixing unit, the X-ray Talbot imaging device 1 can accurately image the same part of the subject H a plurality of times while changing the imaging angle and the grating facing angle (grating facing angle).

Here, the imaging angle is an angle indicating the position of the subject H with respect to the X-ray Talbot imaging device 1, and specifically, is a rotation angle from a reference position P, which will be described later, of the subject table 13. The grating opposing angle is the relation (angle) between the direction of the captured image (or the image displayed after capturing) and the direction of the gratings (the multi-slit 12, the first grating 14, and the second grating 15).

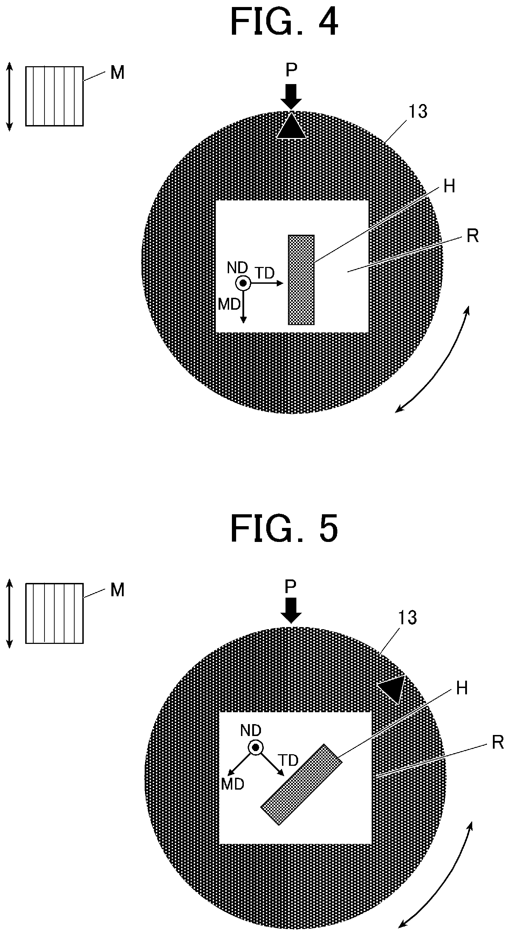

Specifically, the positional relationship between the subject table 13 and the subject H illustrated in Fig. 4 will be described. The photographing angle is 0 ° because the subject table 13 is not rotated with respect to the reference position P. A range to be imaged is indicated by an imaging range R (outlined portion). Furthermore, axes indicating the MD direction, the TD direction, and the ND direction are displayed as images.

Furthermore, the positional relationship between the subject table 13 and the subject H illustrated in Fig. 5 is a state where the subject table 13 is rotated clockwise by 45 ° with respect to the reference position P, and the axes indicating the MD direction, the TD direction, and the ND direction are also rotated. The imaging range R is the same as that in FIG. 4.

In addition, in Figs. 4 and 5, a mark M indicating the orientation (direction of the arrow) of the grating is displayed as an image. Note that in Figs. 4 and 5, when the direction of the image to be captured is the up/down direction of the page, the grating opposing angle is 0 °.

Note that the transmission amount of X-rays varies depending on the grating opposing angle, and when a reconstructed image is generated, an image to be viewed varies depending on the angle. Therefore, an image set of three kinds of reconstructed images based on the same moire image Mo can be acquired for each of a plurality of angles by imaging the same portion of the subject H a plurality of times while changing the grating opposing angle. Here, in order to align the same part of the subject H in the acquired images, alignment may be performed by image processing. In addition, in the alignment, a feature of the subject H may be used, or a marker for alignment different from the subject H may be captured together with the subject H, and the alignment may be performed using the marker.

Furthermore, in the present embodiment, the adjustment of the imaging angle of the subject H is performed by the moving mechanism of the fixing unit, but it is also possible to adopt a configuration in which the X-ray source 11a, the plurality of gratings 12, 14, and 15 (or grating holder), and the X-ray detector 16 rotate around the subject table 13 so that the subject H can be continuously imaged from a plurality of directions.

### [image processing device]

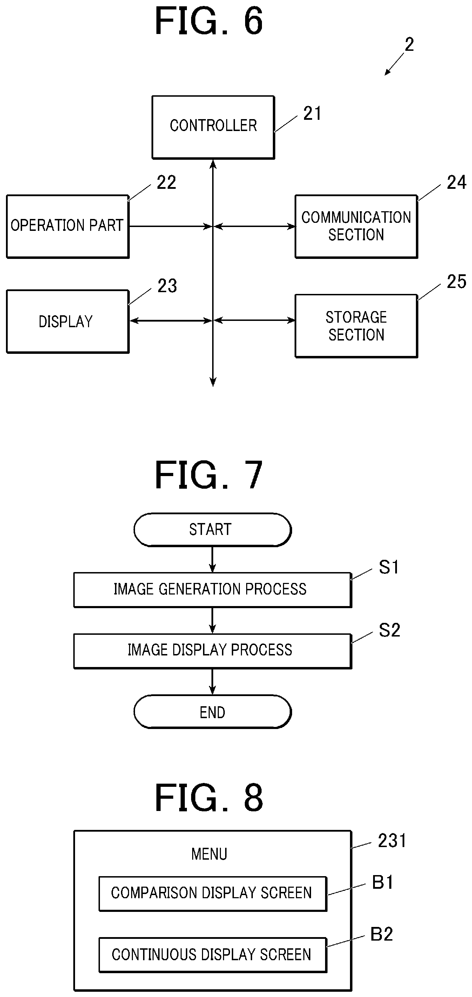

The image processing device 2 can generate three kinds of high-definition reconstructed images (an absorption image, a differential phase image, and a small-angle scattering image) of the subject H, generate an Ave image, an Amp image, a Pha image, a Rad image, and an Ori image, and perform image processing on the obtained reconstructed images by using the moire image Mo obtained by the X-ray Talbot imaging device 1. As illustrated in Fig. 6, such an image processing device 2 includes a controller 21, an operation part 22, a display 23, a communication section 24, and a storage section 25.

Note that the image processing device 2 including the display 23 also functions as an image display device.

The controller 21 includes a central processing unit (CPU), a random access memory (RAM), and the like, and executes various processes including an image display process to be described later in cooperation with a program stored in the storage section 25.

The controller 21 functions as an image processor which aligns the plurality of moire images or reconstructed images in the same direction on the basis of first characteristic information selected by a first selector which will be described later.

The operation part 22 includes a keyboard having cursor keys, number input keys, various function keys, and the like, and a pointing device such as a mouse, and outputs a depression signal of a key depressed on the keyboard and an operation signal by the mouse as input signals to the controller 21. A configuration may be adopted in which a touch screen integrally formed with the display part of the display 23 is included, and an operation signal corresponding to a user input thereon is generated and output to the controller 21.

The operation part 22 functions as a first selector to select one of second characteristic information which will be described later.

The operation part 22 functions as a second selector to select characteristic information on a direction other than second characteristic information which will be described later.

The display 23 includes, for example, a display part such as a cathode ray tube (CRT) or a liquid crystal display (LCD), and displays various display screens, which will be described later, in accordance with display control of the controller 21.

Note that a button B3, which will be described later, functions as a redisplay instructor that causes the plurality of moire images or the reconstructed image to which the second characteristic information is given to be redisplayed.

The communication section 24 includes a communication interface and communicates with the X-ray Talbot imaging device 1 and an external system such as a picture archiving and communication system (PACS) on a communication network in a wired or wireless manner.

The storage section 25 is composed of a nonvolatile semiconductor memory, a hard disk and the like, and stores a program to be executed by the controller 21, data necessary for executing the program, information on the inspection target, information on the photographed image, characteristic information and the like.

The characteristic information is information indicating various characteristics of the subject H, and includes characteristic information on direction. The characteristic information on the direction includes first characteristic information on the direction of the inspection target and second characteristic information on the direction of the image of the inspection target.

The first characteristic information is characteristic information of a direction that the inspection target itself has. Specifically, desirable ones include an MD direction, a TD direction, and an ND direction (processing characteristics of the inspection target). The first characteristic information is stored in the storage section 25 in association with the information on the inspection target. The first characteristic information may also be the orientation of the inspection target and the cutting direction of the inspection target. Note that the orientation of the inspection target is characteristic information of the direction that the actual inspection target has. Specifically, taking the elongated rod-shaped subject H as an example, for example, in a case where the subject H is placed on the subject table 13 in the vertical direction, the orientation of the inspection target is defined as 0 ° (reference), and in a case where the subject H is placed so as to be inclined with respect to this reference, the angle formed with the reference is the orientation of the inspection target. That is, in the example of Fig. 4, when the user arranges the subject H with an inclination of 45 ° while the subject table 13 is kept at the reference position P, the imaging angle is 0 °, the orientation of the inspection target is 45 °, and the grating opposing angle is 0 °. Furthermore, the orientation of the inspection target is not limited to the characteristic information of the direction of the actual inspection target, but may be characteristic information of a designed direction of the inspection target obtained from mold information, CAD/CAE simulation of the inspection target, or the like.

The second characteristic information is characteristic information of a direction inherent in the captured image. Specifically, the information includes the imaging angle (the orientation of the image of the inspection target), the grating opposing angle (the orientation of the grating with respect to the captured image), the front and back, and the direction of the orientation color. The second characteristic information is stored in the storage section 25 in association with the information on the captured image.

Note that the first characteristic information and the second characteristic information are input by a user through a graphical user interface (GUI), automatically determined by the controller 21 from the captured image or the like, read by the controller 21 from a file in which the first characteristic information and the second characteristic information are described, or read by the controller 21 from a database in which the first characteristic information and the second characteristic information are stored, and thus are stored in the storage section 25 in association with the information on the inspection target and the captured image. As an example of the automatic determination, the controller 21 can determine the MD-direction, the TD-direction, and the ND-direction from the captured image, or can perform the determination by estimation from a gate position (a position at which the resins are caused to flow into the mold) in a 3D diagram or the like of the mold of the inspection target.

### (image processing)

The image processing is executed by the controller 21 in cooperation with a program stored in the storage section 25. The image processing includes image generation process (step S1 in Fig. 7) and image display process (step S2 in Fig. 7).

The image generation process is processing for generating captured images (an AT image, an SC image, a DPH image, an Ave image, an Amp image, a Pha image, a Rad image, and an Ori image) using the moire images Mo captured by the X-ray Talbot imaging device 1.

The image display process is processing for displaying the captured image generated in the image generation process. The user can use the operation part 22 to cause the characteristic information (the first characteristic information and the second characteristic information) on the above-described directions to be aligned and displayed in the same direction.

### (display screen)

Various display screens to be displayed on the display 23 by the image display process will be described. Note that in the following description, it is assumed that various display screens are displayed by the controller 21 causing the display 23 to display them. In addition, in the various display screens, operations such as input and button pressing are performed by the user using the operation part 22, and the controller 21 receives information from the operation part 22, changes the display content based on the information, and then causes the display 23 to display the various display screens.

### [Menu Screen]

First, a menu screen 231 for selecting the comparison display screen and the continuous display screen is displayed.

When the button B1 is pressed by the user, the comparison display screen 232 is displayed. The comparison display screen is a screen on which captured images of different subjects H are compared and displayed.

When the button B2 is pressed by the user, the continuous display screen 233 is displayed. The continuous display screen is a screen on which photographed images obtained by photographing the same subject H at different photographing angles are arranged or continuously reproduced and displayed.

More specifically, when the user selects the button B1 or the button B2 and then selects a captured image to be displayed (not shown), the comparison display screen or the continuous display screen is displayed. As a method of selecting a captured image to be displayed, various general methods such as selection from a list and checking of a check box can be considered.

Furthermore, in the selection of a captured image to be displayed, since comparison is performed using a two dimensional captured image in the first embodiment, a captured image whose one direction is the same is selected in a display example 1 (comparison display screen) or a display example 2 (continuous display screen) which will be described later. For example, in the display example 1 (comparison display screen) and the display example 2 (continuous display screen), the comparison is performed by using the captured images having the same ND direction.

### [Display Example 1 Comparison Display Screen]

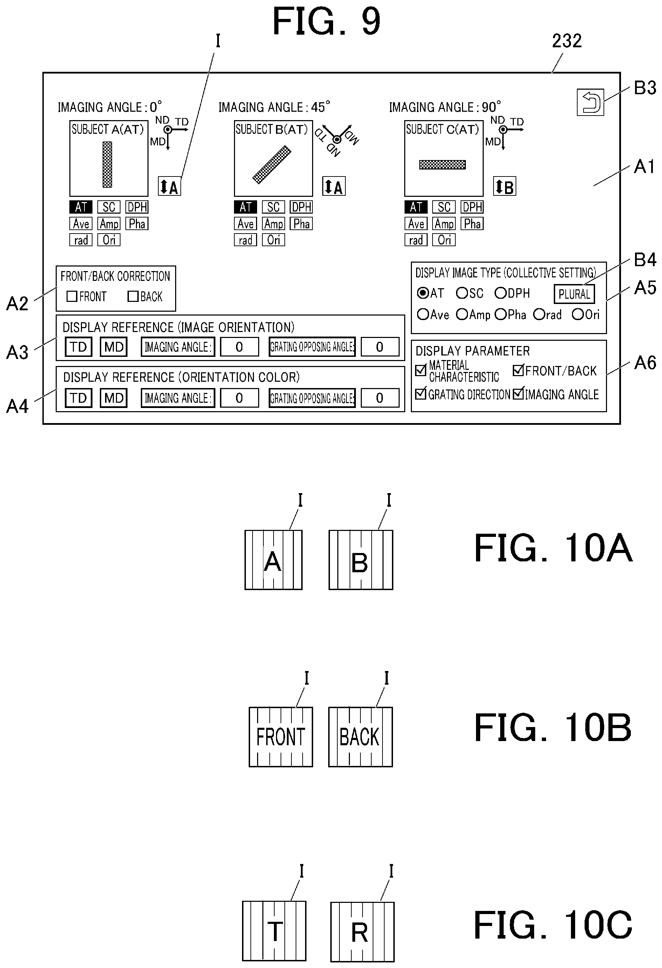

The comparison display screen 232 illustrated in Fig. 9 will be described. In the display example 1, the comparison display screen 232 shown in FIG. 9 is in a default state.

The captured image display region A1 is a region where a captured image of the subject H is displayed. In the example of Fig. 9, photographed images (AT images) of a subject A photographed at a photographing angle of 0 °, a subject B photographed at a photographing angle of 45 °, and a subject C photographed at a photographing angle of 90 ° are displayed from the left of the photographed image display region A1. The subject A and the subject B are samples cut out in the MD direction. On the other hand, the subject C is a sample cut out in the TD direction.

Axes and icons I indicating the MD direction, the TD direction, and the ND direction are displayed on the right side of each captured image. The icon I is an icon indicating the orientation of the grating and the front and back of the subject H. Note that the arrow of the icon I indicates the orientation of the gratings (the multi-slit 12, the first grating 14, and the second grating 15). In addition, "A" of the icon I indicates that the subject H is arranged on the subject table 13 in the front orientation and is photographed. Conversely, when "B" is displayed in the icon I, it indicates that the subject H is placed in back orientation on the subject table 13 and is imaged.

On the lower side of each captured image, variations of the types of captured images are displayed. The colored type is the type (display image type) of each displayed captured image. The user can press one of the displayed types, and a pressed and colored type of captured image is displayed. Then, when the user presses a captured image to be checked, the captured image can be appropriately switched. Furthermore, as described later, the user can also collectively set the display image types of a plurality of captured images by selecting a display image type in the display image type selection area A5.

The front/back correction area A2 is a check box for aligning the front and back of the subject H. When the front is checked by the user, the captured images are aligned in the front orientation. Conversely, when the back is checked by the user, the captured images are aligned in the back orientation.

In the display reference (image orientation) area A3, the orientation in which the captured images are aligned can be selected. In the first embodiment, since the rotation is performed on a plane, when either TD or MD is selected, the TD or MD direction can be aligned. In addition, by inputting and selecting an imaging angle or a grating opposing angle, it is also possible to align the orientation of the image with the input imaging angle or grating opposing angle. Note that the direction of alignment is set to the screen downward orientation as a default setting, but may be, for example, the screen rightward orientation or the screen upward orientation.

The display reference (orientation color) region A4 is a region used when the orientation is displayed in color in the case where the captured image is an orientation image (Ori image). The orientation can be confirmed by representing the orientation with gradation display and changing the color of each captured image to a color corresponding to the orientation. The TD or MD direction of the gradation display can be aligned by selecting either TD or MD. In addition, the orientation of the gradation display can be aligned by inputting an imaging angle or a grating opposing angle.

The display image type selection area A5 is an area in which the type of each captured image to be displayed in the captured image display area A1 can be collectively set. When the plurality button B4 is pressed, a plurality of types of captured images to be displayed in the captured image display area A1 can be set.

The display parameter selection area A6 is an area for selecting characteristic information of each captured image to be displayed in the captured image display area A1. For example, material characteristics (MD direction, TD direction, and ND direction), front and back (subject H), grating direction, and imaging angle are displayed, and the selected characteristic information is displayed together with each captured image. Note that all pieces of characteristic information are selected as a default state, and the pieces of characteristic information are not displayed by unchecking them. In addition, as a default state, all pieces of characteristic information may be set to non-selection and may be displayed by being checked.

The button B3 is a return button (redisplay instructor) for returning (redisplaying) the display of each captured image in the comparison display screen 232 to the default state. That is, since the comparison display screen 232 shown in FIG. 9 is the display screen in the default state, when the button B3 is pressed, the comparison display screen 232 shown in FIG. 9 is displayed.

Note that default setting and a default state in each area are assumed to be performed and set on another display screen (not illustrated).

In addition, a drawing 10A, a drawing 10B, and a drawing 10C are other display examples of the icon I. For example, it is also possible to represent the orientation of the grating by lines.

Further, the front and back of the subject H may be represented by "front", "back", "T (tail)", and "R (reverse)" instead of "A" and "B". Note that the notation is not limited to these examples and may be any notation that allows the front and back of the subject H and the orientation of the grating to be known.

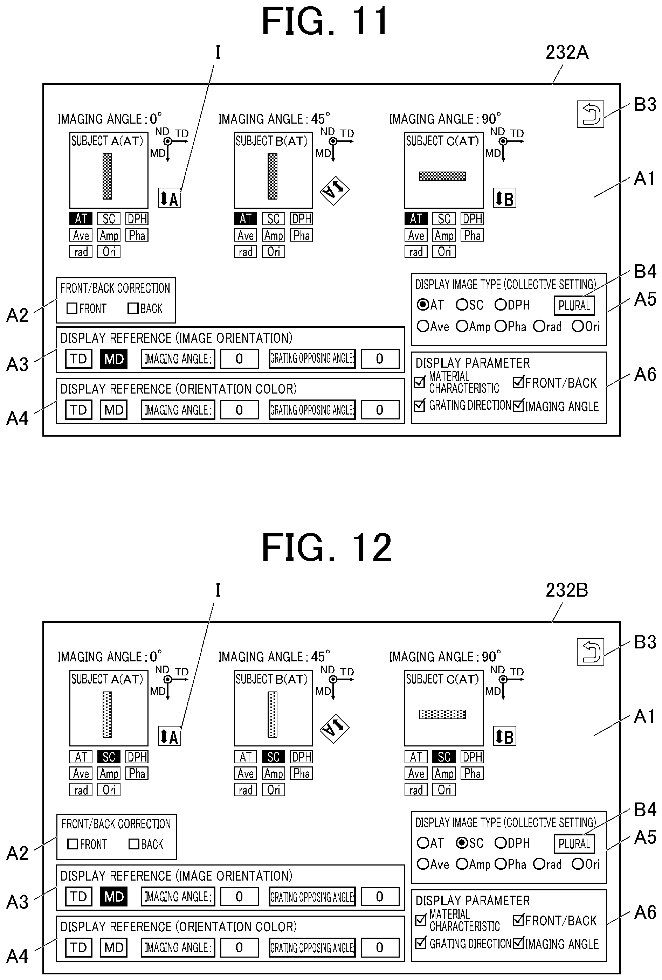

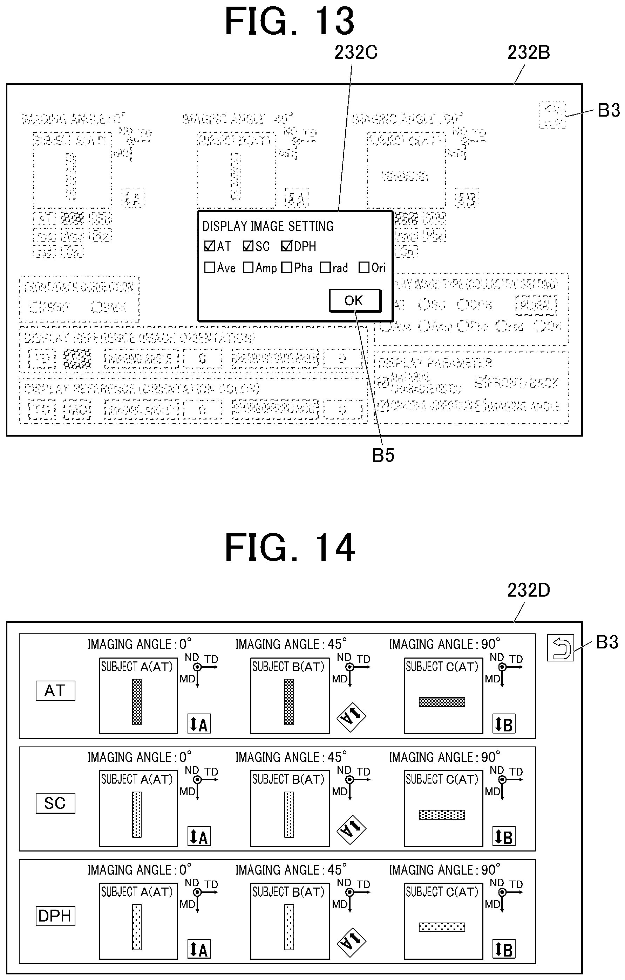

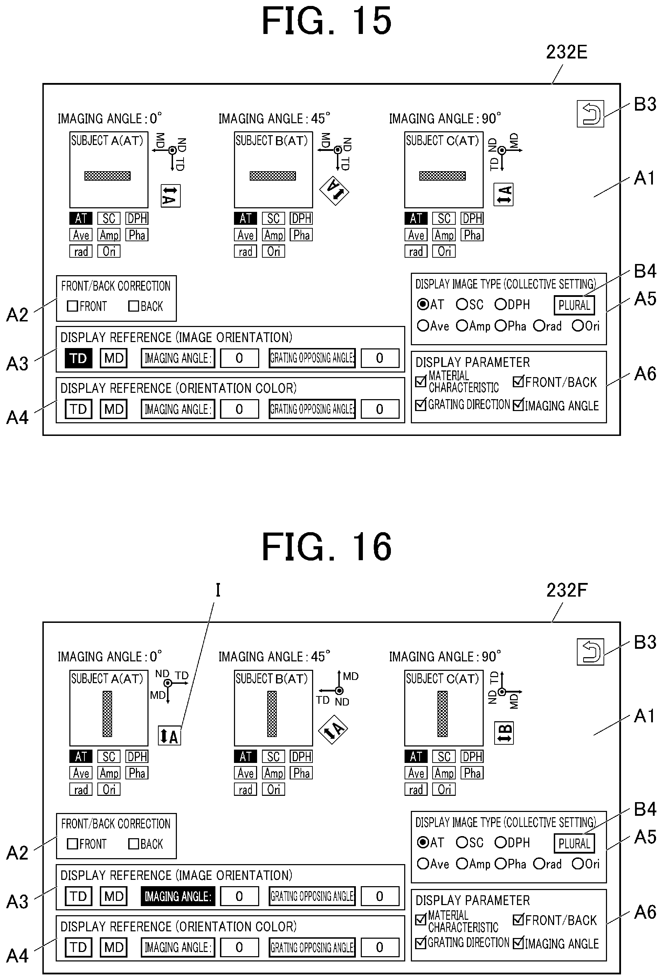

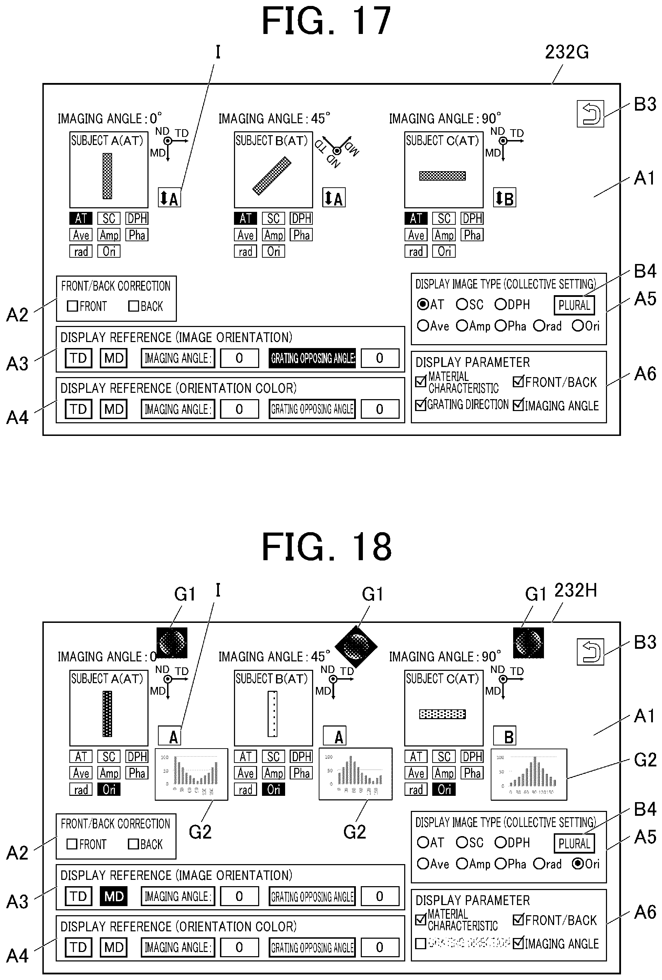

Hereinafter, in the comparison display screen 232, the comparison display screens A2 to A6 after input in the respective areas 232A to 232I are illustrated in Figs. 11 to 19. Note that it is also possible to perform input in a plurality of areas, and for example, it indicates that the screen changes in accordance with the input in the order of Fig. 9 → Fig. 11 → Fig. 12 → Fig. 13 → Fig. 14, Fig. 9 → Fig. 15, and Fig. 9 → Fig. 16 → Fig. 17. The order of screen transition is not limited to this example.

The comparison display screen 232A shown in FIG. 11 is a case where MD is selected in the display reference (image orientation) area A3 of the comparison display screen 232 shown in FIG. 9. That is, when the user selects MD (first characteristic information) by using the operation part 22 that is the second selector (second selection step), the controller 21 aligns the respective photographed images in the MD direction and displays them on the display 23 (display step). Therefore, in the comparison display screen 232 of Fig. 9, the captured image and the characteristic information of the subject B are rotated clockwise by 135 degrees to appear in the 232A of the comparison display screen of Fig. 11, and the MD-directions are aligned.

The comparison display screen 232B shown in FIG. 12 is a case where SC is selected in the display image type selection area 232A of the comparison display screen A5 shown in FIG. 11. When SC is selected, each captured image is changed to a small-angle scattering image. Note that the display of the type of captured image below each captured image is also changed to SC.

The pop-up screen 232C shown in FIG. 13 is displayed when the plural button B4 is pressed in the display image type selection area A5 of the comparison display screen 232B shown in FIG. 12. On the pop-up screen 232C, a plurality of types of display images to be displayed side by side can be selected. This is a case where AT, SC, and DPH are selected on the pop-up screen 232C. Then, when an OK button B5 is pressed in this state, a comparison display screen 232D illustrated in Fig. 14 is displayed. In addition, by pressing the button B3, it is possible to return to the comparison display screen (for example, the comparison display screen 232B illustrated in FIG. 12) before the selection button is pressed.

In the comparison display screen 232D shown in FIG. 14, AT images (absorptive images), SC images (small-angle scattering images), and DPH images (differential phase contrast images) of the subjects A, B, and C are displayed vertically side by side. Note that in the comparison display screen 232A illustrated in Fig. 11, since MD is selected, the state of being aligned in the MD direction is maintained.

The comparison display screen 232E shown in FIG. 15 is a case where "front" is selected in the front and back correction region A2 of the comparison display screen 232 shown in FIG. 9, and TD is selected in the display reference (image orientation) region A3. That is, when the user selects "front" (second characteristic information) using the operation part 22 which is the first selector (a first selection step), the controller 21 turns over the captured image of the subject C and the characteristic information, unifies the characteristic information of the respective captured images to "A", and displays them on the display 23 (a display step). When TD is selected in the display reference (image orientation) region A3, the respective captured images are aligned in the TD direction. Therefore, in the example of the comparison display screen 232 of FIG. 9, the captured image and the characteristic information of the subject B are rotated counterclockwise by 135 °, so that the comparison display screen 232E of FIG. 15 is displayed, and the TD directions are aligned.

The comparison display screen 232F shown in FIG. 16 is a case where the imaging angle is selected in the display reference (image orientation) region A3 of the comparison display screen 232 shown in FIG. 9, and 0 ° is input. That is, when the user inputs the photographing angle of 0 ° (second characteristic information) by using the operation part 22 which is the first selector (first selection step), the controller 21 aligns the respective photographed images at the photographing angle of 0 °, and displays the images on the display 23 (display step). Therefore, in the example of the comparison display screen 232 in Fig. 9, the respective photographed images and characteristic information which are rotated to the left by 45 degrees for the subject B and rotated to the left by 90 degrees for the subject C are displayed.

The comparison display screen 232G shown in FIG. 17 is a case where the grating opposing angle is selected in the display reference (image orientation) region 232F of the comparison display screen A3 shown in FIG. 16, and 0 ° is input. That is, when the user inputs the grating opposing angle of 0 ° (second characteristic information) by using the operation part 22 that is the first selector (first selection step), the controller 21 aligns the respective photographed images at the grating opposing angle of 0 °, and displays the images on the display 23 (display step). Therefore, from the comparison display screen 232F of FIG. 16, the respective photographed images and characteristic information rotated to the right by 45 ° for the subject B and rotated to the right by 90 ° for the subject C are displayed on the comparison display screen 232G.

The comparison display screen 232H shown in FIG. 18 is a case where the Ori image is selected in the display image type selection area A5 of the comparison display screen 232 shown in FIG. 9. In this case, gradation display (upper right of each captured image in the example of FIG. 18) G1 indicating the orientation and histogram display (lower right of each captured image in the example of FIG. 18) G2 of the feature amount (for example, the pixel value) at the orientation angle are performed. Note that the color of each subject is a color corresponding to the direction of the orientation in the gradation display G1, and to be more specific, the color of the upper end of the gradation display G1 for the subject A and the subject B, and the color of the right end of the gradation display G1 for the subject C are the colors of each subject. In a case where the long-side direction of each subject and the orientation of the subject (such as fiber) are different, like the subject B, the gradation display G1 indicating the orientation rotates more, and the orientation of the gradation display G1 in the long-side direction of the subject B becomes the orientation of the subject B. In the histogram display, the horizontal axis represents the orientation angle and the vertical axis represents the feature amount, and 0 ° is the vertex for the subject A because of the orientation in the MD direction, 45 ° is the vertex for the subject B because of the orientation inclined by 45 ° to the right from the MD direction, and 90 ° is the vertex for the subject C because of the orientation in the TD direction. Note that in the histogram display, the feature amount at the angle portion of the orientation direction is the vertex, and the feature amount at the angle portion orthogonal to the orientation direction is the lowest.

In the case of the Ori image, since the concept of the orientation of the grating (grating direction) is unnecessary, the arrow is not displayed in the icon I, and the grating direction cannot be selected in the display parameter selection region A6.

Furthermore, since the MD is selected in the display reference (image orientation) area A3, the captured images are aligned in the MD direction.

In addition, the orientation is the orientation of the substance (composite material) forming the inspection target. Examples of the orientation include the orientation of fibers included in the inspection target and the density of a substance included in the inspection target.

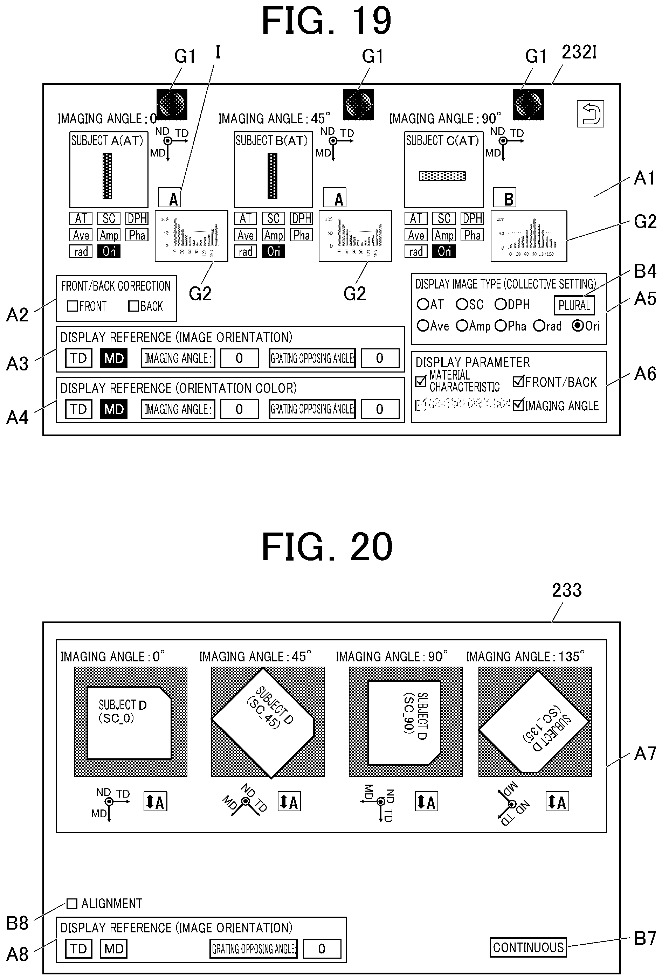

The comparison display screen 232I illustrated in Fig. 19 is a case where MD is selected in the display reference (orientation color) area 232H of the comparison display screen A4 illustrated in Fig. 18. That is, when the user selects MDs (first characteristic information) using the operation part 22 which is the second selector (second selection step), the controller 21 aligns the gradation displays G1 of the respective photographed images in the MDs direction and displays the images on the display 23 (display step). That is, the gradation display G1 indicating the orientation of the subject B is rotated to the right by 45 degrees and is displayed as gradation display similar to the subject A and the subject C. Therefore, the color of the subject B is the same as the color of the subject A. The histogram of the feature amount is also recalculated, and the feature amount has a peak at 0 °.

When a numerical value is input to the imaging angle or the grating opposing angle, the gradation display G1 rotates in the direction of the angle, and the feature amount of the histogram display G2 is recalculated.

### [Display Example 2 Continuous Display Screen]

The continuous display screen 233 illustrated in Fig. 20 will be described.

The continuously captured image display region A7 is a region in which continuously captured images of the subject D are displayed. In the example of Fig. 20, it is assumed that the captured images of the same subject D are captured at the capturing angles of 0 °, 45 °, 90 °, and 135 ° from the left of the continuously captured image display area A7. On the lower side of the captured image, characteristic information is displayed, and specifically, axes and icons I indicating the MD direction, the TD direction, and the ND direction are displayed. Since the orientation of the grating is fixed, it does not change.

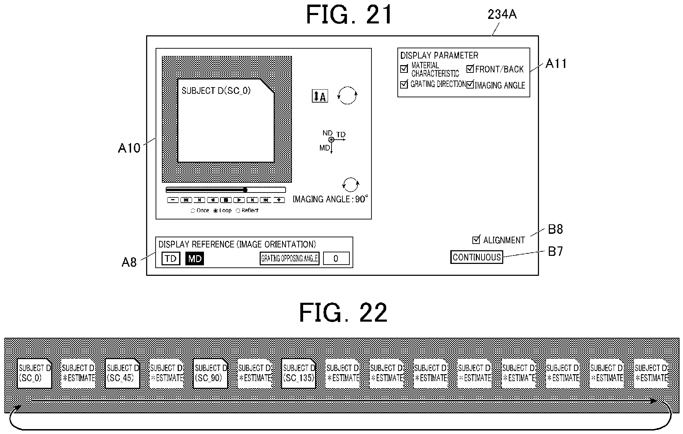

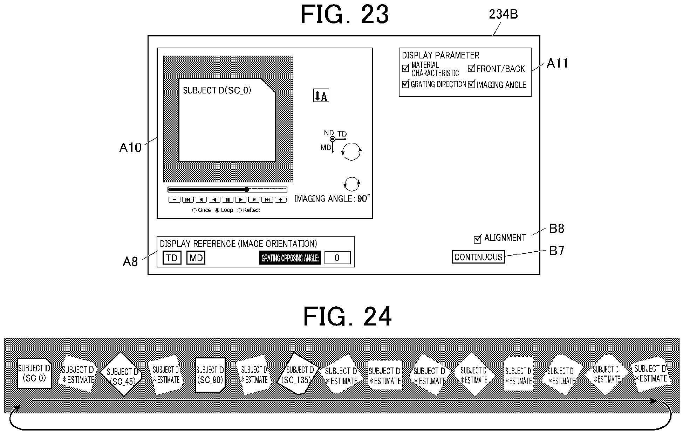

The continuous button B7 is a button for continuously reproducing a plurality of captured images. When the continuous button B7 is pressed, continuous display screens illustrated in Figs. 21 and 23, which will be described later, are displayed.

When the alignment check field B8 is checked, the center points of the plurality of captured images can be aligned. Since the center position of the rotatable subject table 13 and the center point of the subject D are not necessarily match each other, when the subject table 13 is rotated, the center point of the subject D is rotated in a state in which the center point of the subject D is shifted.

The display reference (image orientation) area A8 is the same as the display reference (image orientation) area A3 of the display example 1.

The continuous display screen 234A illustrated in Fig. 21 will be described.

The continuously photographed image reproduction area A10 is an area in which a plurality of photographed images of the same subject D are continuously reproduced. In continuous playback, playback, pause, reverse rotation, looping, and the like are possible. For example, the direction of the orientation of the fibers of the subject D can be confirmed by continuous playback while the direction of the grating changes.

Since the user has selected MD (first characteristic information) in the display reference (image orientation) region A8 using the operation part 22 as the second selector (second selection step), the controller 21 rotates the icon I on the right side of the captured image of the subject D, that is, changes the orientation of the grating, with the MD direction of the captured image fixed downward, and displays the image on the display 23 (display step).

However, for example, only the direction of the orientation of the fibers of the subject D at the positions of the imaging angles of 0 °, 45 °, 90 °, and 135 ° can be confirmed by only the four captured images. Therefore, the controller 21 estimates the captured images between the respective capturing angles, and thus it is possible to reproduce a smoother moving image.

Specifically, an estimation method by the controller 21 will be described. First, the controller 21 acquires the pixel value of each captured image. Next, the controller 21 plots, for each pixel of each captured image, the horizontal axis as the capturing angle and the vertical axis as the pixel value. Next, the controller 21 calculates, for each pixel of each captured image, a sine wave passing through each of the plotted points. Next, the controller 21 generates an estimated image by acquiring, from the sine wave, the pixel value at a certain capturing angle for each pixel of each captured image. In the example of FIG. 22, the controller 21 generates an estimated image for each imaging angle of 22.5 °. Note that the feature is not limited to a sine wave, and a repeated feature that can be expressed by a combination of a sine wave and a cosine wave may be calculated.

The continuous display screen 234B illustrated in Fig. 23 will be described.

Since the user has input the grating opposing angle of 0 ° (second characteristic information) in the display reference (image orientation) region A8 using the operation part 22 as the first selector (first selection step), the controller 21 rotates the captured image of the subject D and the axes indicating the MD direction, the TD direction, and the ND direction with the grating opposing angle of the captured image fixed at 0 °, and displays the captured image and the axes on the display 23 (display step).

Fig. 24 is an image view of a photographed image which is continuously reproduced on a continuous display screen illustrated in Fig. 23. The content of each captured image is the same as the captured image shown in FIG. 22, but in FIG. 24, each captured image is rotated. In the example of Fig. 23, the controller 21 generates estimated images each rotated by an imaging angle of 22.5 °.

### [Second Embodiment]

Although the controller 21 reconstructs a two dimensional image in the description of the X-ray Talbot imaging device 1 above, it is also possible to reconstruct a three dimensional image. A case of aligning a two dimensional plane and a case of aligning a three dimensional plane on the basis of a three dimensional image will be described below.

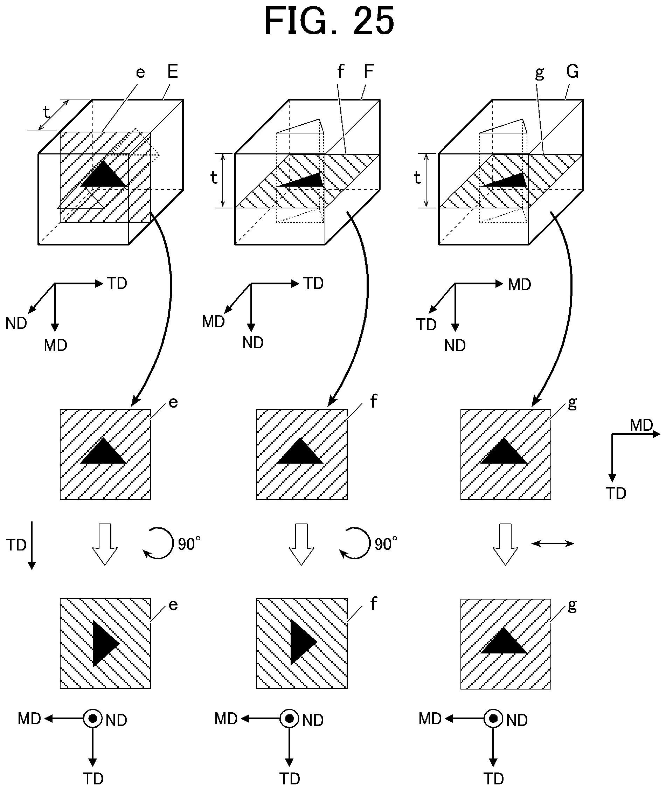

Fig. 25 illustrates an image in which the controller 21 selects a two dimensional image from three dimensional images and aligns the orientations of the two dimensional images. The flow of image processing is the same as the flow shown in FIG. 7.

First, in step S1, the controller 21 acquires three dimensional photographed images (photographed image E, photographed image F, and photographed image G) using three subjects. Next, the controller 21 cuts out a TD-MD plane at the position of t in the ND direction in the three dimensional captured images (the captured image E, the captured image F, and the captured image G). Then, the controller 21 acquires two dimensional captured images (captured image e, captured image f, and captured image g) as shown in the middle stage, and displays the captured images on the display 23. Next, as in the first embodiment, when the user aligns the TD directions (first characteristic information) (second selection step) and aligns the front and back using the operation part 22 (second selector), the controller 21 rotates the captured image e 90 ° clockwise, rotates the captured image f 90 ° clockwise, flips the captured image g front to back, and displays the images on the display 23 as illustrated in the lower part of Fig. 25 (supplementary display step). Then, the user can make a comparison using similar planes whose axes are aligned.

Note that the TD-MD plane at the position of t in the ND direction to be cut out in the above example is specified by the user using the operation part 22.

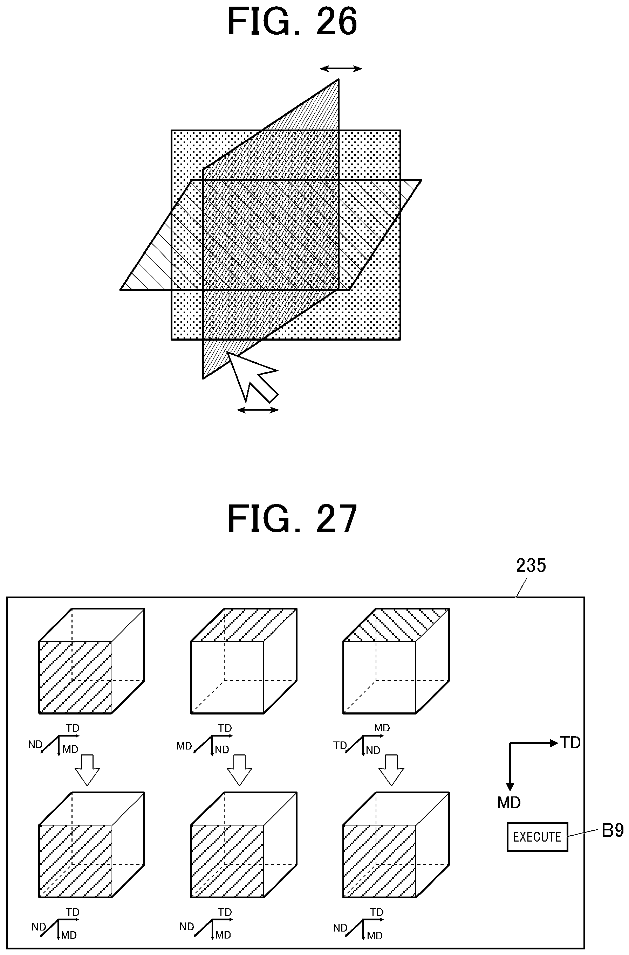

For example, in an image diagram in which three faces are displayed as illustrated in Fig. 26, when a user touches a face with a mouse, the face is highlighted and is clicked to determine a face to be cut out. Then, the user can determine the position by moving while clicking the face to be cut out.

Furthermore, in the selection of the surface to be cut out, the X-Y plane and the Y-Z plane may be selected by providing check boxes on the screen and checking them. Alternatively, the position may be determined by inputting a numerical value.

FIG. 27 shows an image for aligning the orientation of a three dimensional image.

For example, this is an example in which, when the TD and the MD (the first characteristic information) are specified (the second selection step) and the execution button B9 is pressed by the user using the operation part 22 (the second selector), the controller 21 allows the display 23 to perform the three dimensional display (the display step) with the same plane (the TD-MD plane) as the front.

### (Others)

Note that the display 23 may correct and display the positions or sizes of the inspection target objects displayed in the plurality of captured images so as to match those in a specific image. Examples of the specific image include an image selected by the user on the display screen, an image at a certain position (set by default) on the display screen, and an image in a certain standard size (set by default). In addition, the display 23 may correct and display the position or size of the inspection target object displayed in the plurality of captured images so as to be close to a specific image.

A case where the specific image is an image selected by the user on the display screen will be described. For example, the user selects the captured image of the subject A in the captured image display area A1 of the comparison display screen 232 shown in FIG. 9. Then, the controller 21 recognizes the position or size of the subject A displayed in the captured image of the selected subject A, and matches or approximates the position or size of the subject B or the subject C displayed in the captured image of the subject B or the subject C with or to the recognized position or size of the subject A.

A case where the specific image is an image at a certain position (set by default) on the display screen will be described. For example, the controller 21 recognizes the position or size of the subject A displayed in the leftmost captured image in the captured image display area A1 of the comparison display screen 232 shown in FIG. 9, and matches or approximates the position or size of the subject B or the subject C displayed in the captured image of the subject B or the subject C to the recognized position or size of the subject A.

A case where the specific image is an image of a certain standard size (set by default) will be described. For example, the controller 21 recognizes the position or size of a certain subject displayed in a standard image of a standard size set as a default in the storage section 25, and matches or approximates the positions or sizes of the subject A, the subject B, and the subject C displayed in the captured images of the subject A, the subject B, and the subject C to the recognized position or size of the certain subject.

Note that the default setting is to be performed by the user on a setting screen (not illustrated).

In addition, in the above example, the position of the inspection target is aligned with the center of the captured image, and the size is also aligned.

### (Effect)

As described above, the image display device is an image display device (image processing device 2) for displaying a plurality of moire images or reconstructed images to which second characteristic information is given among characteristic information on directions including first characteristic information on the direction of an inspection target and second characteristic information on the direction of an image of the inspection target, and includes a first selector (operation part 22) for selecting one piece of the second characteristic information and a display (display 23) for aligning and displaying the plurality of moire images or reconstructed images in the same direction on the basis of the second characteristic information selected by the first selector, and the display (display 23) displays the characteristic information on directions including at least one piece of the first characteristic information and one piece of the second characteristic information together with the plurality of moire images or reconstructed images, by which characteristic evaluation of the inspection target can be more easily performed.

Furthermore, the image display device (the image processing device 2)) further includes a second selector (the operation part 22) for selecting characteristic information on a direction other than the second characteristic information selected by the first selector in the plurality of moire images or the reconstructed images aligned and displayed in the same direction, and displays the characteristic information on the direction selected by the second selector, thus allowing easier characteristic evaluation of the inspection target.

Furthermore, the image display device (the image processing device 2) includes the second selector (operation part 22) for further selecting the characteristic information on the direction other than the second characteristic information selected by the first selector in a plurality of moire images or reconstructed images aligned and displayed in the same direction, and causes the characteristic information on the direction other than the characteristic information on the direction selected by the second selector (operation part 22) and the second characteristic information selected by the first selector (operation part 22) not to be displayed, so that the characteristic evaluation of the inspection target can be more easily performed.

In addition, since the second characteristic information includes at least one of the orientation of the grating, the orientation of the image of the inspection target, and the direction of the orientation color, the characteristic evaluation of the inspection target can be more easily performed.

In addition, it is possible to more easily perform the characteristic evaluation of the inspection target object by including the redisplay instructor that redisplays the plurality of moire images or the reconstructed image to which the second characteristic information is given.

In addition, the display (display 23) switches and displays a plurality of moire images or reconstructed images which are aligned in the same direction and displayed together with characteristic information on various directions, and thus it is possible to more easily perform characteristic evaluation of the inspection target.

In addition, since the display (display 23) displays the plurality of moire images or reconstructed images on the same screen, it is possible to more easily perform characteristic evaluation of the inspection target.

In addition, since the subjects of the plurality of moire images or reconstructed images are subjects cut out from the inspection target, it is possible to more easily perform characteristic evaluation of the inspection target.

In addition, the display (display 23) corrects and displays the position or the size of the inspection target object displayed in the plurality of moire images or the reconstructed image so as to match the specific image, and thus it is possible to more easily evaluate the characteristics of the inspection target object.

The display (display 23) continuously displays the plurality of moire images or reconstructed images in the same direction, so that the characteristic evaluation of the inspection target can be more easily performed.

In addition, the display (display 23) complements and displays the moire images or reconstructed images between the plurality of moire images or reconstructed images in the continuous display, thus allowing easier characteristic evaluation of the inspection target.

The display (display 23) displays the histogram based on the orientation of the substances constituting the inspection target, so that the orientation is easily visually recognized and the characteristic evaluation of the inspection target can be more easily performed.

Furthermore, the image display system is an image display device (image display system including the image processing device 2)) for displaying a plurality of moire images or reconstructed images with the second characteristic information of the characteristic information on direction including the first characteristic information on the direction of the inspection target and the second characteristic information on the direction of the image of the inspection target, and includes a first selector (operation part 22) for selecting one of the second characteristic information and a display (display 23) for displaying the plurality of moire images or reconstructed images aligned in the same direction based on the second characteristic information selected by the first selector, wherein the display (display 23) displays the characteristic information on direction including at least one piece of the first characteristic information and one piece of the second characteristic information together with the plurality of moire images or reconstructed images, thus allowing easier characteristic evaluation of the inspection target.

The image display method is an image display method using an image display device displaying a plurality of moire images or reconstructed images provided with second characteristic information among first characteristic information on a direction of an inspection target and second characteristic information on a direction of an image of the inspection target, the method including a first selection step of selecting one of the second characteristic information and a display step of displaying the plurality of moire images or reconstructed images aligned in the same direction based on the second characteristic information selected in the first selection step, wherein the characteristic information on the direction including at least one piece of the first characteristic information and one piece of the second characteristic information is displayed together with the plurality of moire images or reconstructed images in the display step, whereby characteristic evaluation of the inspection target can be more easily performed.

The image processing device (the image processing device 2) is an image processing device that performs image processing on a plurality of moire images or reconstructed images to which second characteristic information is given among characteristic information on a direction including first characteristic information on a direction of an inspection target and second characteristic information on a direction of an image of the inspection target, and includes a first selector (the operation part 22) that selects one piece of the second characteristic information, and an image processor (the controller 21) that aligns the plurality of moire images or reconstructed images in the same direction based on the second characteristic information selected by the first selector, and the image processor causes the display (the display 23) to display the characteristic information on the direction including at least one piece of the first characteristic information and one piece of the second characteristic information together with the plurality of moire images or reconstructed images, thereby making it possible to more easily evaluate the characteristics of the inspection target.

The program causes a computer of the image display device (the image processing device 2) that displays a plurality of moire images or reconstructed images to which second characteristic information is given among characteristic information on a direction including first characteristic information on a direction of an inspection target and second characteristic information on a direction of an image of the inspection target to function as a first selector (the operation part 22) for selecting one piece of the second characteristic information and an image processor (the controller 21) for aligning the plurality of moire images or reconstructed images in the same direction based on the second characteristic information selected by the first selector, and the image processor causes the display (the display 23) to display the characteristic information on the direction including at least one piece of the first characteristic information and one piece of the second characteristic information together with the plurality of moire images or reconstructed images, thus allowing easier characteristic evaluation of the inspection target.

Although the embodiment of the present invention has been described above, the description in the above-described embodiment is a preferred example according to the present invention, and the present invention is not limited thereto.

For example, although the image processing device 2 including the display 23 functions also as the image display device in the description above, the image processing device and the image display device may be separate devices. Specifically, the image display device may perform only the display processing, and another image processing device may perform various processing and the management of information such as characteristic information. For example, the image processing device may be a cloud, and only display processing may be performed by the image display device.

Although a hard disk, a semiconductor nonvolatile memory, or the like is used in the above description as a computer-readable medium storing the program according to the present invention, the present invention is not limited to this example. Other applicable computer-readable recording media include portable recording media such as CD-ROM.

In addition, the detailed configuration and the detailed operation of each device can be appropriately changed without departing from the spirit and scope of the present invention.

### Industrial Applicability

The present disclosure can be used for an image display device, an image display system, an image display method, an image processing device, and a program.

### Reference Signs List

1 X-ray Talbot imaging device
2 image processing device
11 X-ray generating device
11a X-ray source
12 source grating (G0 grating)
13 subject table
14 first grating (G1 grating)
15 second grating (G2 grating)
16 X-ray detector (FPD)
21 controller (image processor)
22 operation part (first selector, second selector)
23 display
24 communication section
25 storage section
H subject
S Slit
Mo moire image

## Claims

1. An image display device that displays a plurality of moire images or reconstructed images to which second characteristic information among characteristic information on a direction including first characteristic information on a direction of an inspection target and the second characteristic information on a direction of an image of the inspection target is given, the image display device comprising:
a first selector that selects one piece of the second characteristic information; and
a display that aligns and displays the plurality of moire images or reconstructed images in a same direction, based on the second characteristic information selected by the first selector,
wherein
the display displays characteristic information on the direction including at least one piece of the first characteristic information and one piece of the second characteristic information together with the plurality of moire images or reconstructed images.

2. The image display device according to claim 1, comprising a second selector that further selects characteristic information on the direction other than the second characteristic information selected by the first selector in the plurality of moire images or reconstructed images aligned and displayed in the same direction, wherein
the characteristic information on the direction selected by the second selector is displayed.

3. The image display device according to claim 1, comprising a second selector that further selects characteristic information on the direction other than the second characteristic information selected by the first selector in the plurality of moire images or reconstructed images aligned and displayed in the same direction, wherein
the image display device causes characteristic information on the direction other than the characteristic information on the direction selected by the second selector and the second characteristic information selected by the first selector not to be displayed.

4. The image display device according to any one of claims 1 to 3, wherein the second characteristic information includes at least one of an orientation of a grating, an orientation of an image of the inspection target, and a direction of an orientation color.

5. The image display device according to any one of claims 1 to 3, comprising a redisplay instructor that causes the plurality of moire images or reconstructed images to which the second characteristic information is given to be redisplayed.

6. The image display device according to any one of claims 1 to 3, wherein the display switches and displays the plurality of moire images or reconstructed images which are aligned in the same direction and displayed with the characteristic information on the direction.

7. The image display device according to any one of claims 1 to 3, wherein the display displays the plurality of moire images or reconstructed images on a same screen.

8. The image display device according to claim 1 or 2, wherein a subject of the plurality of moire images or reconstructed images is an object cut out from the inspection target.

9. The image display device according to claim 1 or 2, wherein the display corrects and displays a position or a size of the inspection target displayed in the plurality of moire images or reconstructed images so as to match a specific image.

10. The image display device according to any one of claims 1 to 3, wherein the display continuously displays the plurality of moire images or reconstructed images so as to be aligned in the same direction.

11. The image display device according to claim 10, wherein the display complements and displays a moire image or a reconstructed image between the plurality of moire images or reconstructed images in continuous displaying.

12. The image display device according to any one of claims 1 to 3, wherein the display displays a histogram based on an orientation of a substance constituting the inspection target.

13. The image display device according to any one of claims 1 to 3, wherein the inspection target is a molded product of a composite material.

14. The image display device according to any one of claims 1 to 3, wherein the inspection target is a plurality of inspection targets.

15. An image display system including an image display device that displays a plurality of moire images or reconstructed images to which second characteristic information among characteristic information on a direction including first characteristic information on a direction of an inspection target and the second characteristic information on a direction of an image of the inspection target is given, the image display system comprising:
a first selector that selects one piece of the second characteristic information; and
a display that aligns and displays the plurality of moire images or reconstructed images in a same direction, based on the second characteristic information selected by the first selector,
wherein
the display displays characteristic information on the direction including at least one piece of the first characteristic information and one piece of the second characteristic information together with the plurality of moire images or reconstructed images.

16. An image display method using an image display device that displays a plurality of moire images or reconstructed images to which second characteristic information among characteristic information on a direction including first characteristic information on a direction of an inspection target and the second characteristic information on a direction of an image of the inspection target is given, the method comprising:
a first selection step of selecting one piece of the second characteristic information; and
a display step of aligning and displaying the plurality of moire images or reconstructed images in a same direction, based on the second characteristic information selected in the first selection stsep,
wherein
in the display step, characteristic information on the direction including at least one piece of the first characteristic information and one piece of the second characteristic information is displayed together with the plurality of moire images or reconstructed images.

17. An image processing device that performs image processing on a plurality of moire images or reconstructed images to which second characteristic information among characteristic information on a direction including first characteristic information on a direction of an inspection target and the second characteristic information on a direction of an image of the inspection target is given, the image processing device comprising:
a first selector that selects one piece of the second characteristic information; and
an image processor that aligns the plurality of moire images or reconstructed images in a same direction, based on the second characteristic information selected by the first selector,
wherein
the image processor causes a display to display characteristic information on the direction including at least one piece of the first characteristic information and one piece of the second characteristic information together with the plurality of moire images or reconstructed images.

18. A program for a computer of an image display device that displays a plurality of moire images or reconstructed images to which second characteristic information among characteristic information on a direction including first characteristic information on a direction of an inspection target and the second characteristic information on a direction of an image of the inspection target is given, the program causing the computer to function as:
a first selector that selects one piece of the second characteristic information; and
an image processor that aligns the plurality of moire images or reconstructed images in a same direction, based on the second characteristic information selected by the first selector,
wherein
the image processor causes a display to display characteristic information on the direction including at least one piece of the first characteristic information and one piece of the second characteristic information together with the plurality of moire images or reconstructed images.
